# EUROPÄISCHE PATENTSCHRIFT

(11) **EP 2 972 607 B1**
(45) Veröffentlichungstag und Bekanntmachung des Hinweises auf die Patenterteilung: **23.09.2020**
(21) Anmeldenummer: 14719192.8
(22) Anmeldetag: 13.03.2014
(51) Int. Cl.: G05B 19/042, G05B 23/02

(54) **VERFAHREN ZUR BEHANDLUNG VON FEHLERN IN EINEM ZENTRALEN STEUERGERÄT SOWIE STEUERGERÄT**
METHOD FOR HANDLING FAULTS IN A CENTRAL CONTROL DEVICE, AND CONTROL DEVICE
PROCÉDÉ DE TRAITEMENT D'ERREURS DANS UNE UNITÉ DE COMMANDE CENTRALE ET UNITÉ DE COMMANDE

(30) Priorität: 14.03.2013 AT 2002013; 13.12.2013 AT 508242013
(43) Veröffentlichungstag der Anmeldung: 20.01.2016
(73) Patentinhaber: TTTech Auto AG, 1040 Wien (AT)
(72) Erfinder: POLEDNA, Stefan, A-3400 Klosterneuburg (AT)
(74) Vertreter: Patentanwaltskanzlei Matschnig & Forsthuber OG
(86) Internationale Anmeldenummer: PCT/AT2014/050064
(87) Internationale Veröffentlichungsnummer: WO 2014/138767

(56) Entgegenhaltungen:
- WO-A1-01/44778
- DE-A1-102007 030 589
- US-A- 3 688 099
- US-A- 5 528 215
- US-A1- 2008 059 016
- US-A1- 2012 304 024

## Beschreibung

Die Erfindung betrifft ein Verfahren zur Behandlung von Fehlern in einem zentralen Steuergerät gemäß dem Oberbegriff des Anspruchs 1.

Weiters betrifft die Erfindung ein zentrales Steuergerät gemäß dem Oberbegriff des Anspruchs 6.

Insbesondere liegt die vorliegende Erfindung im Bereich der Kraftfahrzeugelektronik. Ein redundantes Fahrzeugdiagnosesystem ist z.B. aus der US 2008/0059016 A1 bekannt.

US 2012/304024 A1 offenbart ein Verfahren zur Behandlung von Fehlern in einem zentralen Steuergerät.

Das Dokument WO 01/44778 A1 befasst sich mit der sicheren Ansteuerung des Bremskolbens einer Scheibenbremse, Dokument DE 10 2007 030589 A1 beschreibt die redundante Überwachung der Pulslängen und Pulsflanken von synchronen PWM Signalen, und US 5 528 215 A betrifft ein Automatisierungssystem.

Auch US 3 688 099 A, US 2012/304024 A1 und das Buch von Hermann Kopetz [5] *"Real-Time* Systems - *Design Principles for Distributed Embedded Applications"* (Springer), beschreiben weitere verschiedene Aspekte redundanter ausfallsicherer Steuerungssysteme, die mit dieser Anwendung zusammenhängen.

Die technologischen und ökonomischen Entwicklungen auf dem Gebiet der Mikroelektronik und der Sensortechnik ermöglichen den Bau von elektronischen Assistenzsystemen für Kraftfahrzeuge, die den Fahrer in vielen Fahrsituationen erheblich entlasten. Ein typisches Assistenzsystem besteht aus einer Anzahl von unterschiedlichen und zum Teil redundanten Sensoren (z.B. Kamera(s), Radar, Laser, Ultraschallsensoren), die das Umfeld des Fahrzeugs zyklisch beobachten und die vorverarbeiteten Daten an ein zentrales Steuergerät zur Datenfusion und weiteren Auswertung der Daten übergeben. Das zentrale Steuergerät berechnet aus diesen Daten Stellgrößen für Lenkung, Bremsen und Motor des Fahrzeuges, so dass das Fahrzeug unter gewissen Bedingungen autonom fahren kann.

Im Juni 2012 hat die NCAP (*European New Car Assessment Program*) Organisation eine Roadmap [8] veröffentlicht, aus der hervorgeht, dass im Jahr 2016 *Autonomous Emergency Braking* (AEB) Systeme in neuen Kraftfahrzeugen auf breiter Front eingeführt werden sollen. In weiterer Folge wird erwartet, dass elektronische Systeme zum autonomen Fahren zuerst im Markt für *Premium Fahrzeuge* und später im *Massenmarkt* zum Einsatz kommen werden.

Aus technisch/kommerzieller Sicht ist es eine große Herausforderung, diese elektronischen Systeme, deren Funktionalität in Prototypen bereits demonstriert werden konnte [2], so zu gestalten, dass die geforderte Funktionalität und Zuverlässigkeit mit vertretbaren Kosten erreicht werden können. Neben den einmaligen Entwicklungskosten sind im Massenmarkt die wiederkehrenden Produktionskosten der Computer Hardware sind insbesondere im Massenmarkt die wiederkehrenden Produktionskosten von besonderer Bedeutung.

In einem Fahrerassistenzsystem ist die Zuverlässigkeit und Sicherheit der Funktionen von besonderer Wichtigkeit. Da prinzipiell jede Komponente eines technischen Systems ausfallen kann, muss durch die geeignete Anwendung von Redundanz sichergestellt sein, dass auch bei Ausfall eines Sensors oder einer elektronischen Komponente die wichtigen Funktionen des Gesamtsystems aufrechterhalten werden können. Da in der Fahrzeugelektronik die in der Flugzeugelektronik übliche Verdreifachung der Elektronik zur Maskierung eines Fehlers aus Kostengründen nicht realisiert werden kann, müssen neue Wege zur Erreichung der geforderten Zuverlässigkeit und Sicherheit gefunden werden.

Die vorliegende Erfindung wird durch die unabhängigen Ansprüche definiert. Die abhängigen Ansprüche definieren weitere vorteilhafte Ausführungsformen. Wenn sich der Begriff "Ausführungsform" in der folgenden Beschreibung nicht auf beanspruchte Kombinationen von Merkmalen bezieht, ist dieser Begriff so zu verstehen, dass er sich nur auf Beispiele bezieht, die einen Kontext für das Verständnis der vorliegenden Erfindung bieten.

Es ist eine Aufgabe der vorliegenden Erfindung, ein Verfahren zur Behandlung von Fehlern in einem Steuergerät, insbesondere einem zentralen Steuergerät, z.B. einem Steuergerät für ein Kraftfahrzeug anzugeben, sodass auch nach Ausfall eines Sensors oder einer elektronischen Komponente die wesentlichen Funktionen des Steuergerätes aufrecht erhalten werden können, um beispielsweise das Fahrzeug autonom in einen sicheren Zustand führen zu können.

Weiters ist es eine Aufgabe der Erfindung, ein Steuergerät, insbesondere ein zentrales Steuergerät, vorzugsweise ein Steuergerät für ein Kraftfahrzeug anzugeben, das auch nach Ausfall eines Sensors oder einer elektronischen Komponente seine wesentlichen Funktionen aufrecht erhalten kann, um beispielsweise das Fahrzeug autonom in einen sicheren Zustand führen zu können.

Diese Aufgabe wird mit einem eingangs erwähnten Verfahren sowie einem eingangs erwähnten Steuergerät dadurch gelöst, dass erfindungsgemäß das verteilte Computersystem, insbesondere alle Komponenten des Computersystems, auf eine erste Fault-Containment-Unit FCU1 und eine zweite Fault-Containment-Unit FCU2 aufgeteilt ist,
wobei die FCU1 und die FCU2 jeweils über eine eigene, unabhängige Stromversorgung versorgt werden, und wobei
die FCU1 und die FCU2 ausschließlich über galvanisch getrennte Leitungen Daten austauschen, und wobei
ein Teil der Sensoren zumindest mit der FCU1 verbunden ist und der andere Teil der Sensoren zumindest mit der FCU2 verbunden ist, und wobei
die FCU1 und die FCU2 mit einem Kommunikationssystem mit einem oder mehreren Aktuatoren, insbesondere zur Weiterleitung von Ergebnissen der Fault-Containment-Units an die Aktuatoren, verbunden sind, sodass bei Ausfall der FCU1 die FCU2 eine eingeschränkte Funktionalität unter Verwendung der der FCU2 zugeordneten Sensoren aufrecht erhält, und bei Ausfall der FCU2 die FCU1 eine eingeschränkte Funktionalität unter Verwendung der der FCU1 zugeordneten Sensoren aufrecht erhält. Das Kommunikationssystem ist dabei vorzugsweise redundant ausgelegt.

Erfindungsgemäß werden die Funktionen des zentralen Steuergeräts auf zwei unabhängige Fault-Containment Units (FCUs), die FCU1 und die FCU2 aufgeteilt. Eine FCU ist eine Einheit, die alle unmittelbaren Folgen eines Fehlers einer ihrer Komponenten abkapselt (Siehe [5, p.136]). Jede der beiden FCUs besteht aus zwei Subsystemen, dem SS1, das die eine spezifizierte Funktion ausführt und dem SS2, das das korrekte Verhalten des SS1 überwacht. Ein Teil der Sensoren ist zumindest an die FCU1 angeschlossen und der andere Teil zumindest an die FCU2. Die beiden FCUs, FCU1 und FCU2 werden von getrennten Stromversorgungen gespeist und kommunizieren über galvanisch getrennte Leitungen, um eine Fortpflanzung eines Hardwarefehlers einer FCU auf die andere FCU auszuschließen.

Jede der beiden FCUs kann ohne Mitwirkung der jeweils anderen FCU mit den ihr zugeordneten Sensoren die Umgebung beobachten und eine minimale Funktionalität des Fahrzeugs aufrechterhalten. Diese minimale Funktionalität ermöglicht den eingeschränkten, aber sicheren Betrieb des Fahrzeugs bis zur Erreichung eines sicheren Zustands (z.B. autonomes Abstellen des Fahrzeugs am Straßenrand oder bis zu einem Zeitpunkt, zu dem der Fahrer die manuelle Kontrolle über das Fahrzeug übernimmt). Im Normalfall, wenn beide FCUs funktionstüchtig sind, wird die volle Funktionalität erbracht.

Aus Gründen der Zuverlässigkeit (und auch aus Kostengründen) werden beide FCUs auf einer einzigen Leiterplatte angeordnet. Durch die Anordnung beider FCUs auf einer Leiterplatte können die Signale der FCUs über Leiterbahnen ohne mechanische Steckverbindungen ausgetauscht werden. Erfahrungsgemäß hat eine Leiterbahn eine wesentlich höhere Zuverlässigkeit (und geringere Kosten) als eine Steckverbindung. Diesem Vorteil steht der Nachteil gegenüber, dass im (seltenen) Fall eines permanenten Hardwarefehlers die gesamte Leiterplatte ausgetauscht werden muss.

Die vorliegende Erfindung beschreibt somit, wie durch den Aufbau und die Funktion eines zentralen Steuergeräts in einem Fahrzeug der Ausfall eines Teils des Steuergeräts und der Sensoren toleriert werden kann. Es wird vorgeschlagen, die Funktionen des zentralen Steuergeräts auf zwei unabhängige *Fault-Containment Units (FCUs)* aufzuteilen, wobei jede FCU mit einem Teil der Sensoren verbunden ist, über eine eigene Stromversorgung verfügt und wo die beiden FCUs ausschließlich über galvanisch getrennte Leitungen Daten austauschen. Bei Ausfall einer FCU oder der angeschlossen Sensoren ist die andere FCU in der Lage, die spezifizierte Funktion in eingeschränktem Umfang mit ihren Sensoren aufrecht zu erhalten. In keinem der im Rahmen einer Patentanalyse gefundenen Patente [1] - [4] wurde eine Vorrichtung oder ein Verfahren gefunden, dass dem oben beschriebenen entspricht oder nahe kommt.

Erfindungsgemäß ist weiters vorgesehen, dass die FCU1 und die FCU2, oder eine oder mehrere Komponenten der FCU1 und eine oder mehrere Komponenten der FCU2 haben Zugriff auf eine global synchronisierte Zeit, und die FCU1 und die FCU2 jeweils aus einem ersten Subsystem SS1 und einem zweiten Subsystem SS2 bestehen, wobei die ersten Subsysteme SS1 die Verarbeitung der Sensordaten vornehmen und die zweiten Subsysteme SS2 die Funktion des jeweiligen ersten Subsystems SS1 überwacht, und die zweiten Subsysteme SS2 periodisch ein Challenge-Response Protokoll zur Überprüfung der Funktion des ersten Subsystems SS1 aus führen.

Erfindungsgemäß sendet das zweite Subsystem jeder Fault-Containment Unit periodisch eine *I-am-alive* Nachricht an die andere Fault-Containment-Unit; der Zeitpunkt des rechtzeitigen Eintreffen der periodischen *I-am-alive* Nachricht wird von der anderen Fault-Containment-Unit mit einem *Time-out* überwacht; und die Zeitpunkte des Sendens der *I-am-alive* Nachricht und der *Time-out Überwachung* der *I-am-alive* Nachricht sind in der empfangenden Fault-Containment-Unit über die globale Zeit synchronisiert.

Im Folgenden ist eine beispielhafte Realisierung der Erfindung an Hand der Zeichnung näher erörtert. In dieser zeigt
Fig. 1 den Aufbau eines erfindungsgemäßen zentralen Steuergeräts, und
Fig.2 die Anbindung von Sensoren an das zentrale Steuergerät über Nachrichtenverteilereinheit.

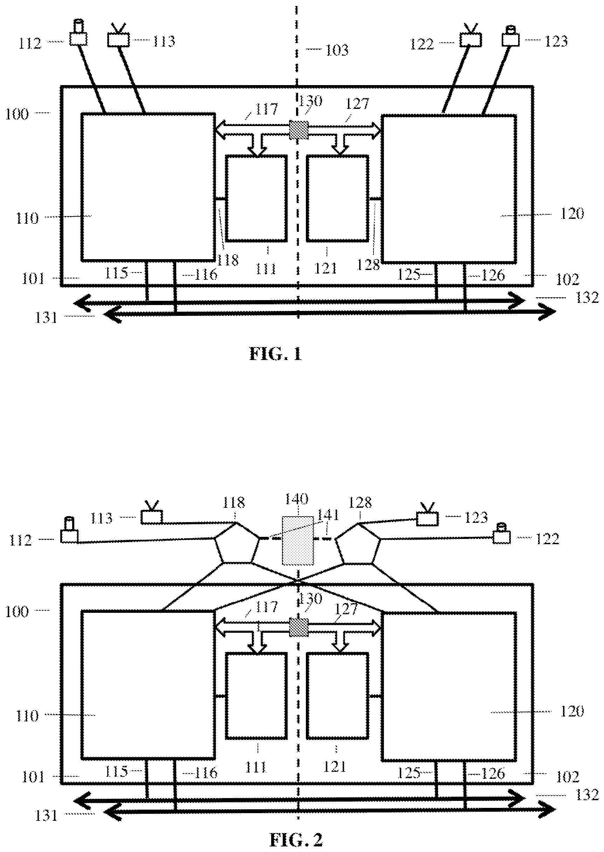

Figur 1 zeigt den Aufbau eines Steuergeräts, insbesondere eines zentralen Steuergeräts. Die Funktion des Steuergerätes wird von einem verteilten Computersystem realisiert, wobei die Komponenten dieses verteilten Computersystems auf einer zentralen Platine 100 angeordnet sind. Bei den Komponenten des Computersystems handelt es sich beispielsweise um CPUs, GPUs, FPGAs, Speicherbausteine usw.

Das Computersystem ist in eine links von der Trennlinie 103 befindliche FCU1 101 und eine rechts von der Trennlinie 103 befindliche FCU2 102 aufgeteilt, in welche FCUs die Komponenten des Computersystems aufgeteilt sind.

Die FCU1101 besteht aus einem Funktionssubsystem SS1 110 und einem Monitorsubsystem SS2 111. In dem gezeigten, nicht einschränkenden Beispiel sind zwei Sensoren 112, 113 direkt an das SS1 110 angeschlossen. Das SS2 111 der FCU 101 ist über einen Datenbus 117 mit dem SS1 110 und über eine galvanische Trennung 130 mit einem Datenbus 127 der FCU2 102 verbunden. Über eine direkte Leitung 118 kann SS2 111 ein Hardware-Reset Signal an SS1 110 senden. SS1 110 ist über eine Verbindung 115 einen den Datenbus 132 und über eine Verbindung 116 an einen Datenbus 131 angeschlossen.

Der Aufbau der FCU2 102 ist analog zu FCU1. FCU2 102 besteht aus einem Funktionssubsystem SS1 120 und einem Monitorsubsystem SS2 121. In dem gezeigten, nicht einschränkenden Beispiel sind zwei Sensoren 122, 123 direkt an das SS1 120 angeschlossen. Das SS2 121 der FCU 102 ist über einen Datenbus 127 mit dem SS1 120 und über die galvanische Trennung 130 mit dem Datenbus 117 der FCU1 101 verbunden. Über die direkte Leitung 128 kann SS2 121 ein Hardware-Reset Signal an SS1 120 senden. SS1 120 ist über eine Verbindung 125 an den Datenbus 132 und über die Verbindung 126 an den Datenbus 131 angeschlossen.

Die Sensoren 112, 113, 122, 123 sind im allgemeinen Fall unterschiedlich (diversitär), zum Beispiel kann der Sensor 112 ein Kamera mit Teleobjekt sein, der Sensor 113 ein Radar Sensor, der Sensor 122 ein Laser Sensor und der Sensor 123 eine Kamera mit Weitwinkelobjektiv. Im Rahmen des Systementwurfs ist sicherzustellen, dass jede der beiden FCUs mit den ihr zugeordneten Sensoren den eingeschränkten Betrieb aufrechterhalten kann.

Allgemeine Beispiele für Sensoren sind: Kameras, Lasersensoren, Infrarotsensoren, Radarsensoren, Ultraschallsensoren oder Funkverbindungen zur Infrastruktur (*Car to Infrastructure*) oder zu anderen Fahrzeugen (*Car to Car*). Über diese Funkverbindungen können Informationen über die Straße (z.B. Eisbildung) oder den Verkehr (z.B. Stau durch Unfall) erfasst werden.

Vorzugsweise haben alle Komponenten der FCU1 101 und der FCU2 102 sowie die angeschlossenen Sensoren 112, 113, 122, 123 Zugriff auf eine globale Zeit. Die Uhrensynchronisation kann mittels des IEEE 1588 Standards [7] realisiert werden.

Im Normalbetrieb empfängt SS1 110 der FCU1 101 periodisch Daten der Sensoren 112 und 113 und verarbeitet diese Daten, um z.B. Objekte im Umfeld des Fahrzeugs zu erkennen. Analog empfängt SS1 120 der FCU2 102 periodisch Daten der Sensoren 122 und 123 und verarbeitet diese Daten, um beispielsweise Objekte im Umfeld des Fahrzeugs zu erkennen. Anschließend werden die erkannten Objekte über die Busse 117 der FCU1 101 bzw. 127 der FCU2 102 ausgetauscht, um in diesem Beispiel ein Modell des Umfelds des Fahrzeugs zu verbessern. Auf Basis dieses verbesserten Umfeld-Modells errechnen die beiden SS1 die gewünschten Stellgrößen und geben diese Stellgrößen über ein vorzugsweise redundantes Kommunikationssystem in Form der redundanten Busse 131 und 132 periodisch an die Aktuatoren. Im Normalbetrieb erhält ein Aktuator am Ende eines Zyklus vier identische Werte, zwei von der FCU1101 (je einen über den Bus 131 und einen über den Bus 132) und zwei von der FCU2 102 (je einen über den Bus 131 und einen über den Bus 132).

Vorzugsweise sind der oder die Kommunikationskanäle des Kommunikationssystems ebenfalls galvanisch getrennt, z.B. über Optokoppler. Da auch die beiden FCUs galvanisch getrennt sind, ist sichergestellt, dass ein Einzelfehler, z.B. ein Kurzschluss, nur eine FCU betrifft.

Um zu verhindern, dass ein physikalischer Fehler (z.B. Wassereinbruch) beide FCUs gleichzeitig beschädigt, ist es vorteilhaft, wenn das Gehäuse der Platine **100** zwei getrennte, abgeschlossene Kammern aufweist.

Die jeweils an eine gemeinsame FCU angeschlossenen Sensoren **112, 113** bzw. **122,123** bilden vorzugsweise jeweils ein autarkes Sensoriksystem bilden. Ein Sensoriksystem ist *autark,* wenn es alle notwendigen Informationen zum Aufbau eines Modells einer Umgebung liefert.

Da an die beiden FCUs FCU1, FCU2 unterschiedliche Sensoren angeschlossen sind, ist auch die Software dieser FCUs vorzugsweise unterschiedlich (*diversitär*). Die Diversität der Software ist von großem Vorteil, da es sehr unwahrscheinlich wird, dass in beiden Versionen ein Softwarefehler zur gleichen Zeit wirksam wird.

Nach Abgleich der Informationen über die erfassten Objekte in der Umgebung des Fahrzeuges unter Verwendung des galvanisch getrennten Kommunikationskanals errechnen die FCUs die Stellwerte für ein *Aktuatorsystem.* Das *Aktuatorsystem* umfasst z.B. die Ansteuerung der Bremsen und/oder der Lenkung und/oder der Beschleunigung eines Kraftfahrzeugs.

Im Normalbetrieb überwachen die Monitorkomponenten SS2 (die Komponenten 111 in FCU 101 und 121 in FCU 102) die Stromversorgung der jeweiligen FCU, die Plausibilität der Datenstrukturen der jeweiligen FCU und die Funktion der Verarbeitungskomponenten SS1 (die Komponenten 110 in FCU 101 und 120 in FCU 102).

Die Plausibilität der Datenstrukturen der FCU wird auf syntaktischer und vorzugsweise auch auf semantischer Ebene überprüft. Die syntaktische Überprüfung bezieht sich auf formale Integrität der Datenstruktur. Die semantische Überprüfung hat die Plausibilität der in den Datenstrukturen gespeicherten Werte zum Inhalt.

Die Überwachung der Funktion der Verarbeitungskomponenten SS1 erfolgt durch die periodische Ausführung eines Challenge Response Protokolls. Ein Challenge Response Protokoll ist eine spezielle Form eines *Request-Reply* Protokolls. Der Sender SS2 übergibt periodisch an SS1 ein Eingabedatum und fordert SS1 auf (*request*), mittels eines vorgegebenen Programms, das die Ausführung von möglichst vielen der Hardwarebefehle von SS1 umfasst, das Resultat zu errechnen und innerhalb einer vorgegeben Zeitschranke zu antworten (*reply*). Wenn das von SS1 errechnete Ergebnis richtig und rechtzeitig ist, so schließt SS2 dass die Hardware von SS1 funktioniert.

Wenn alle Überprüfungen die Fehlerfreiheit der überwachten SS1 feststellen, so sendet das SS2 111 der FCU1101 über den Bus 117 eine *I am alive* Nachricht an das SS2 121 der FCU2 102

Analog sendet das SS2 121 der FCU2 102 über den Bus 127 eine *I am alive* Nachricht an das SS2 111 der FCU1 101. Der entsprechende Empfänger der *I am alive* Nachricht überwacht diese periodische Nachricht mit einem Time-out. Erfindungsgemäß werden der Zeitpunkt des Sendens der *I am alive* Nachricht mit dem Zeitpunkt des Time-outs der *I am alive* Nachricht über die globale Zeit synchronisiert, um die Fehlererkennungslatenz zu minimieren.

Wenn kein Fehler erkannt wurde, so sendet die FCU1 101 periodisch den *relevanten Teil* ihres inneren Zustands und die globale Zeit an die FCU2 102. Analog sendet, wenn kein Fehler erkannt wurde, die FCU2 102 periodisch den relevanten Teil ihres inneren Zustands und die globale Zeit an die FCU1 101.

Der *relevante Teil des inneren Zustands* umfasst die als wichtig klassifizierten Informationen des *ground States.* Der *ground State* eines zyklischen Systems ist der Zustand des Systems zu jenem periodisch wiederkehrenden Zeitpunkt (*dem ground-state Zeitpunkt*), zu dem die Gesamtheit der Informationen aus der Vergangenheit, die auf das zukünftige Verhalten des Systems einen Einfluss haben können, innerhalb des Zyklus ein Minimum durchläuft.

Im Rahmen der Entwicklung einer Anwendung muss entschieden werden, welche Informationen des *ground States* in dieser Anwendung relevant sind. Zum Beispiel kann in einem Fahrerassistenzsystem festgelegt werden, dass alle Objekte, die einen Durchmesser von mehr als 10 cm haben und auf der Fahrbahn liegen im *relevanten Teil des inneren Zustands* des Modells, welches das Umfeld des Fahrzeugs beschreibt, abzubilden sind.

Wenn in der FCU1 101 oder in einem oder mehreren der an FCU1 angeschlossenen Sensoren 112 oder 113 ein Fehler aufgetreten ist, oder wenn die Stromversorgung von FCU1 101 ausgefallen ist, so sendet SS2 111 keine *I am alive Nachricht* an SS2 121. SS2 121 erkennt den Fehler sofort durch das Ausbleiben der periodischen *I am alive Nachricht* von SS2 111. SS2 121 fordert dann SS1 120 von FCU2 102 auf, mit den vorhandenen Sensoren 122 und 123 den eingeschränkten Betrieb zu realisieren und das Fahrzeug in einen sicheren Zustand bringen.

Wenn in der FCU2 102 oder in einem oder mehreren der an FCU2 angeschlossenen Sensoren 122 oder 123 ein Fehler aufgetreten ist, oder wenn die Stromversorgung von FCU2 102 ausgefallen ist, so sendet SS2 121 keine *I am alive Nachricht* an SS2 111. SS2 111 erkennt den Fehler sofort durch das Ausbleiben der periodischen *I am alive Nachricht* von SS2 121. SS2 111 fordert dann SS1 110 von FCU1 101 auf, mit den vorhandenen Sensoren 112 und 113 den eingeschränkten Betrieb zu realisieren und das Fahrzeug in einen sicheren Zustand bringen.

Da die Wahrscheinlichkeit für das Auftreten eines transienten Fehlers um Größenordnungen höher ist als das Auftreten eines permanenten Fehlers [5, p.155], versucht die fehlerhafte FCU nach dem Erkennen eines Fehlers, sofort einen autonomen Wiederanlauf. Als erstes führt SS2 ein *Hardware Reset* durch, um alle internen Datenstrukturen von SS2 neu zu initialisieren. Im nächsten Schritt veranlasst SS2 über die Hardware Reset Leitung (die Leitung 118 in FCU1 101 bzw. die Leitung 128 in FCU2 102) ein Hardware Reset von SS1 und den an SS1 angeschlossenen Sensoren. Anschließend wartet die FCU bis die Nachricht mit dem relevanten Teil des inneren Zustands von der funktionsfähigen FCU eintrifft. Diese Nachricht enthält auch die globale Zeit und ermöglicht die Zeitsynchronisation der fehlerhaften FCU und der angeschlossen Sensoren. In der Folge übernimmt die anlaufende FCU den inneren Zustand der Partner FCU und schließt die Reintegration mit dem erneuten Senden der *I am alive Nachricht* ab.

Fig. 2 zeigt eine Alternative zur Anbindung der Sensoren. Zwischen den Sensoren 112 und 113 und den FCUs ist eine Nachrichtenverteilereinheit 118 eingeschoben, so dass die Sensordaten von 112 und 113 sowohl an die FCU1 101 wie auch an die FCU2 102 übertragen werden können. Analog ist zwischen den Sensoren 122 und 123 und den FCUs eine Nachrichtenverteilereinheit 128 eingeschoben, so dass die Sensordaten von 122 und 123 sowohl an die FCU1101 wie auch an die FCU2 102 übertragen werden können.

Der Vorteil dieser Alternative, die mit höheren Kosten verbunden ist, liegt darin, dass im Fehlerfall einer FCU die verbleibende funktionsfähige FCU Zugriff auf alle Sensordaten hat. Ein weiterer Vorteil besteht darin, dass über Verbindungen, beispielsweise Steckverbindungen 141 ein externer Monitor und Simulator 140 an die Verteilereinheiten 118 und 128 angeschlossen werden kann, so dass während der Inbetriebnahme alle Sensordaten ohne Beeinflussung des Systemverhaltens beobachtet werden und im Replay Verfahren die gespeicherten Sensordaten in Echtzeit erneut an die FCU 101 und die FCU 102 gesendet werden können, um Sonderfälle wiederholt genau analysieren zu können. Als Protokoll für die Nachrichtenverteilereinheiten 118 und 128 bietet sich das TT Ethernet Protokoll [6] an.

Die im Zusammenhang mit Figur 1 beschriebenen vorteilhaften Ausgestaltungen können auch im Zusammenhang mit der Ausführungsform realisiert sein.

Die vorliegenden Erfindung legt ein Steuergerät offen, wie die erforderlichen hochintegrierten elektronischen Bauteile, vorzugsweise auf einer *einzigen Platine,* so angeordnet werden können, dass auch im Fehlerfall eine notwendige Minimalfunktionalität aufrechterhalten werden kann. Durch die entsprechende Anordnung aller wesentlichen Bauteile, insbesondere auf einer einzigen Platine, werden einerseits die Produktionskosten herabgesetzt, anderseits wird die Zuverlässigkeit verbessert, da keine zusätzlichen Kabel- und Steckverbindungen, insbesondere zwischen Platinen notwendig, sind. Erfahrungsgemäß haben Kabel- und Steckverbindungen eine wesentlich geringere Zuverlässigkeit als die Leiterbahnen auf einer Platine.

Die wesentliche Idee der vorliegenden Erfindung besteht darin, die die Umgebung beobachtenden Sensoren und die zur Auswertung erforderliche Elektronik auf zwei vorzugsweise *autarke Fault-Containment Units (FCU)* aufzuteilen. Unter einer *FCU* wird ein abgekapseltes Sensor/Hardware/Software Subsystem verstanden, wobei die unmittelbaren Auswirkungen eines Fehlers dieses Subsystems (gleichgültig ob es sich um einen Hardware oder Software oder Sensorfehler handelt) auf dieses Subsystem eingegrenzt sind [5, S.136]. Eine FCU ist *autark,* wenn diese FCU in der Lage ist, eine minimale Funktionalität ohne Bezugnahme auf eine weitere FCU zu erbringen.

Es ist nicht erforderlich, dass die beiden FCUs mit *identischen* Sensoren ausgestattet sind. Beispielsweise ist es möglich, dass teure Sensoren, die die Umgebung beobachten, nicht dupliziert sind, da die Vielzahl der unterschiedlichen Sensoren (Laser, Kamera, Radar, Infrarot, etc.) hochredundante Informationen über den Zustand der Umgebung liefern.

Die beiden Subsysteme können über einen Kommunikationskanal zwischen den beiden FCUs, der galvanisch getrennt ist, Informationen austauschen. Im Normalfall (wenn beide FCU funktionieren) können somit die von *allen* Sensoren gelieferten Daten genutzt werden, um *ein internes dreidimensionales Modell* der Umgebung eines Fahrzeugs aufzubauen. In diesem Modell sind alle Objekte, die von den Sensoren erkannt wurden, räumlich dargestellt und klassifiziert (z.B. ob es sich um ein Hindernis oder einen Schatten handelt). Wenn im vorgesehenen Fahrweg ein Hindernis erkannt wurde, so wird eine entsprechende Information (z.B. Bremsen oder Lenken) an die Aktuatoren ausgegeben.

Das vorgeschlagene Steuerungssystem funktioniert vorzugsweise zyklisch. Ein Zyklus beginnt mit der Beobachtung der Umgebung durch die Sensoren. In der Folge werden die Sensordaten an die FCU, die mit dem Sensor verbunden ist, zur Verarbeitung und Modellbildung weitergeleitet. Im nächsten Schritt werden die Modelle der beiden FCUs abgeglichen. Durch die Verfolgung eines Objekts (*object tracking*) in aufeinanderfolgenden Zyklen kann die Richtung und Geschwindigkeit der Bewegung des Objekts festgestellt werden [9]. Am Ende eines Zyklus werden die Sollwerte für die Aktuatoren berechnet. Die Dauer eines Zyklus, der alle beschriebenen Schritte beinhaltet, beträgt typischerweise 10 msec.

Es ist vorteilhaft, wenn die Zyklen der beiden FCUs synchronisiert sind. Die Synchronisation der Zyklen der beiden FCUs kann von einem zentralen Taktgeber oder über eine fehlertolerante Uhr erfolgen [siehe z.B. 5, S. 69].

Wenn eine der beiden FCUs aufgrund eines Fehlers ausfällt, so kann die verbleibende funktionsfähige FCU die geforderte minimale Funktionalität des Systems aufrechterhalten.

### Zitierte Dokumente:

[1] US Patent 8,566,633. Fuhrman, et al. *Method of Dynamic Allocation on a Statically allocated and Embedded Software Architecture.* Granted Oct. 22, 2013
[2] US Patent 7,669,073. Graham et al. *System and Method for Split Mode Operation of Fault-Tolerant Computer Systems.* Granted Feb 23, 2010
[3] US Patent 6,654,910. Eibach et al. *Intelligent Fault Management.* Granted Nov. 25, 2003.
[4] US Patent Application 20110246831. Das; Dipankar et al. *Method and Apparatus for Operational Level Functional and Degradation Fault Analysis.* Published Oct. 6, 2011.
[5] Kopetz, H. Real-Time Systems, Design Principles for Distributed Embedded Applications. Springer Verlag. 2011.
[6] SAE Standard AS6802 von TT Ethernet. URL: http://standards.sae.org/as6802
[7] IEEE 1588 Standard for a Precision Clock Synchronization Protocol for Network Measurement and Control Systems. URL: http://wwwoieee1588.com/
[8] NCAP Rating Group. EURO NCAP Rating Review 2012. Online at: http://www.euroncap.com/
[9] Babenko, B. et al. Robust Object Tracking with Online Multiple Instance Learning. IEEE Trans. On Pattern Analysis and Machine Intelligence. Vol. 33. No. 8. Pp. 1619-1632. August 2011.

## Patentansprüche

1. Verfahren zur Behandlung von Fehlern in einem zentralen Steuergerät, wobei das Steuergerät ein verteiltes Computersystem (100) umfasst, an welches verteilte Computersystem (100) Sensoren (112, 113, 122, 123) angeschlossen sind, wobei
das verteilte Computersystem (100) auf eine erste Fault-Containment-Unit FCU1 (101) und eine zweite Fault-Containment-Unit FCU2 (102) aufgeteilt ist, wobei die FCU1 und die FCU2, oder eine oder mehrere Komponenten der FCU1 und eine oder mehrere Komponenten der FCU2 Zugriff auf eine globale synchronisierte Zeit haben, und wobei die FCU1 (101) und die FCU2 (102) jeweils aus einem ersten Subsystem SS1 (110, 120) und einem zweiten Subsystem SS2 (111, 121) bestehen, wobei die ersten Subsysteme SS1 (110, 120) die Verarbeitung der Sensordaten vornehmen und die zweiten Subsysteme SS2 (111, 121) die Funktion des jeweiligen ersten Subsystems SS1 (110, 120) überwachen, und wobei
ein Teil der Sensoren zumindest mit der FCU1 (101) verbunden ist und der andere Teil der Sensoren zumindest mit der FCU2 (102) verbunden ist, und wobei
die FCU1 (101) und die FCU2 (102) mit einem redundant ausgeführten Kommunikationssystem (131, 132) mit einem oder mehreren Aktuatoren verbunden sind,
**dadurch gekennzeichnet, dass**
die FCU1 (101) und die FCU2 (102) jeweils über eine eigene, unabhängige Stromversorgung versorgt werden, und wobei die FCU1 (101) und die FCU2 (102) ausschließlich über galvanisch getrennte Leitungen Daten austauschen, sodass eine Fortpflanzung eines Hardwarefehlers von einer Fault-Containment-Unit auf die andere Fault-Containment-Unit ausgeschlossen ist, wobei
die zweiten Subsysteme SS2 (111, 121) periodisch ein Challenge-Response Protokoll zur Uberprüfung der Funktion des ersten Subsystems SS1 (110, 120) ausführen, wobei jeweils das zweite Subsystem (111,121) einer Fault-Containment-Unit (101,102) periodisch eine *I-am-alive* Nachricht an die andere Fault-Containment-Unit (102, 101) sendet, wobei der Zeitpunkt des rechtzeitigen Eintreffen der periodischen *I-am-alive* Nachricht von der anderen Fault-Containment-Unit mit einem *Time-out* überwacht wird, und wobei die Zeitpunkte des Sendens der *I-am-alive* Nachricht und der *Time-out Überwachung* der *I-am-alive* Nachricht in der empfangenden Fault-Containment-Unit über die globale Zeit synchronisiert sind.

2. Verfahren nach Anspruch 1, wobei die zweiten Subsysteme SS2 (111, 121) die Datenstrukturen innerhalb ihrer Fault-Containment-Unit (101, 102) periodisch überprüfen.

3. Verfahren nach Anspruch 1 oder 2, wobei im Falle eines, insbesondere über das Ablaufen des Timeout der *I-am-alive* Nachricht, erkannten Ausfalls einer Fault-Containment-Unit (101, 102) die überlebende Fault-Containment-Unit (102, 101) eine eingeschränkte Funktionalität unter Verwendung der ihr zugeordneten Sensoren realisiert.

4. Verfahren nach einem der Ansprüche 1 bis 3, wobei jede funktionierende Fault-Containment-Unit (101, 102) periodisch den *relevanten Teil ihres internen Zustands* an die andere Fault-Containment-Unit (102, 101) sendet.

5. Verfahren nach einem der Ansprüche 1 bis 4, wobei nach einem Ausfall des ersten Subsystems SS1 (110, 120) einer Fault-Containment-Unit (101, 102) das zweite Subsystem SS2 (111, 121) ein *Reset* des ersten Subsystems SS1 (110, 120) anstößt, und in der Folge die ausgefallene Fault-Containment-Unit (101, 102) eine Reintegration unter Verwendung des internen Zustands der anderen Fault-Containment-Unit (102, 101) vornimmt.

6. Zentrales Steuergerät, zur Steuerung von Bremsen und/oder Lenkung und/oder Beschleunigung in einem Kraftfahrzeug, wobei das Steuergerät ein verteiltes Computersystem (100) umfasst, an welches verteilte Computersystem (100) Sensoren (112, 113, 122, 123) angeschlossen sind, wobei
das verteilte Computersystem (100) auf eine erste Fault-Containment-Unit FCU1 (101) und eine zweite Fault-Containment-Unit FCU2 (102) aufgeteilt ist, wobei die FCU1 und die FCU2, oder eine oder mehrere Komponenten der FCU1 und eine oder mehrere Komponenten der FCU2 Zugriff auf eine globale synchronisierte Zeit haben, und wobei
die FCU1 (101) und die FCU2 (102) jeweils aus einem ersten Subsystem SS1 (110, 120) und einem zweiten Subsystem SS2 (111, 121) bestehen, wobei die ersten Subsysteme SS1 (110, 120) die Verarbeitung der Sensordaten vornehmen und die zweiten Subsysteme SS2 (111, 121) die Funktion des jeweiligen ersten Subsystems SS1 (110, 120) überwachen,
und wobei
ein Teil der Sensoren zumindest mit der FCU1 (101) verbunden ist und der andere Teil der Sensoren zumindest mit der FCU2 (102) verbunden ist, und wobei
die FCU1 (101) und die FCU2 (102) mit einem redundant ausgeführten Kommunikationssystem (131, 132) mit einem oder mehreren Aktuatoren verbunden sind,
**dadurch gekennzeichnet, dass**
die FCU1 (101) und die FCU2 (102) jeweils über eine eigene, unabhängige Stromversorgung versorgt werden, und wobei die FCU1 (101) und die FCU2 (102) ausschließlich über galvanisch getrennte Leitungen Daten austauschen, sodass eine Fortpflanzung eines Hardwarefehlers von einer Fault-Containment-Unit auf die andere Fault-Containment-Unit ausgeschlossen ist, wobei
die zweiten Subsysteme SS2 (111, 121) periodisch ein Challenge-Response Protokoll zur Uberprüfung der Funktion des ersten Subsystems SS1 (110, 120) ausführen,
wobei jeweils das zweite Subsystem (111,121) einer Fault-Containment-Unit (101,102) periodisch eine *I-am-alive* Nachricht an die andere Fault-Containment-Unit (102, 101) sendet, wobei der Zeitpunkt des rechtzeitigen Eintreffen der periodischen *I-am-alive* Nachricht von der anderen Fault-Containment-Unit mit einem *Time-out* überwacht wird, wobei die Zeitpunkte des Sendens der *I-am-alive* Nachricht und der *Time-out Überwachung* der *I-am-alive* Nachricht in der empfangenden Fault-Containment-Unit über die globale Zeit synchronisiert sind.

7. Steuergerät nach Anspruch 6, wobei die zweiten Subsysteme SS2 (111, 121) die Datenstrukturen innerhalb ihrer Fault-Containment-Unit (101, 102) periodisch überprüfen.

8. Steuergerät nach Anspruch 6 oder 7, wobei im Falle eines, insbesondere über das Ablaufen des Timeout der *I-am-alive* Nachricht, erkannten Ausfalls einer Fault-Containment-Unit (101, 102) die überlebende Fault-Containment-Unit (102, 101) eine eingeschränkte Funktionalität unter Verwendung der ihr zugeordneten Sensoren realisiert.

9. Steuergerät nach einem der Ansprüche 6 bis 8, wobei jede funktionierende Fault-Containment-Unit (101, 102) periodisch den *relevanten Teil ihres internen Zustands* an die andere Fault-Containment-Unit (102, 101) sendet.

10. Steuergerät nach einem der Ansprüche 6 bis 9, wobei nach dem Ausfall des ersten Subsystems SS1 (110, 120) einer Fault-Containment-Unit (101, 102) das zweite Subsystem SS2 (111, 121) ein *Reset* des ersten Subsystems SS1 (110, 120) anstößt, und in der Folge die ausgefallene Fault-Containment-Unit (101, 102) eine Reintegration unter Verwendung des internen Zustands der anderen Fault-Containment-Unit (102, 101) vornimmt.

11. Steuergerät nach einem der Ansprüche 6 bis 10, wobei die FCU1 und die FCU2 auf einer einzigen Leiterplatte (100) angeordnet sind.

12. Steuergerät nach einem der Ansprüche 6 bis 11, wobei ein einer Fault-Containment-Unit zugeordneter Sensor mit einer Nachrichtenverteileinheit verbunden bzw. verbindbar ist, welche Nachrichtenverteileinheit sowohl mit der dem Sensor zugeordneten Fault-Containment-Unit als auch mit der anderen Fault-Containment-Unit verbindbar bzw. verbunden ist.

13. Steuergerät nach einem der Ansprüche 6 bis 12, wobei die FCUs mit einem globalen Taktgeber verbunden sind, wobei vorzugsweise die FCUs mit einem fehlertoleranten globalen Taktgeber verbunden sind.

14. Steuergerät nach einem der Ansprüche 6 bis 13, wobei die FCUs mittels eines Ethernet Kommunikationssystem verbunden sind.

## Claims

1. Method for handling errors in a central control device, the control device comprising a distributed computer system (100), where to said distributed computer system (100) sensors (112, 113,122, 123) are connected, wherein
the distributed computer system (100) is split into a first fault containment unit FCU1 (101) and a second fault containment unit FCU2 (102), wherein the FCU1 and the FCU2, or one or more components of the FCU1 and one or more components of the FCU2, have access to a global synchronized time, and wherein
the FCU1 (101) and the FCU2 (102) each consist of a first subsystem SS1 (110, 120) and a second subsystem SS2 (111, 121), the first subsystems SS1 (110, 120) performing the processing of the sensor data and the second subsystems SS2 (111, 121) monitoring the function of the respective first subsystem SS1 (110, 120), and wherein
one part of the sensors is at least connected to the FCU1 (101) and the other part of the sensors is at least connected to the FCU2 (102), and wherein
the FCU1 (101) and the FCU2 (102) are connected to a redundantly realized communication system (131, 132) having one or more actuators,
**characterized in that**
the FCU1 (101) and the FCU2 (102) are power-supplied by respective independent power supplies of their own, and wherein the FCU1 (101) and the FCU2 (102) exchange data exclusively via electrically isolated lines, so as to exclude propagation of a hardware fault from one fault containment unit to the other fault containment unit, wherein
the second subsystems SS2 (111, 121) periodically execute a challenge-response protocol to check the function of the first subsystem SS1 (110, 120), wherein the respective second subsystem (111, 121) of one fault contact unit (101, 102) periodically sends an *I-am-alive* message to the respective other fault contact unit (102, 101), wherein the time of the timely arrival of the periodic *I-am-alive* message is monitored by the other fault containment unit with a *time-out,* and wherein the times of transmission of the *I-am-alive* message and of the *time-out monitoring* of the *I-am-alive* message are synchronized over the global time in the receiving fault containment unit.

2. Method according to claim 1, wherein the second subsystems SS2 (111, 121) periodically check the data structures within their fault containment units (101, 102).

3. Method according to claim 1 or 2, wherein in the event of a detected failure of a fault containment unit (101, 102), in particular detected through expiry of the timeout of the *I-am-alive* message, the surviving fault containment unit (102, 101) realizes a limited functionality using the sensors associated with it.

4. Method according to any one of claims 1 to 3, wherein each functioning fault containment unit (101, 102) periodically sends the relevant part of its internal state to the respective other fault containment unit (102, 101).

5. Method according to any one of claims 1 to 4, wherein after a failure of the first subsystem SS1 (110, 120) of a fault containment unit (101, 102), the second subsystem SS2 (111, 121) initiates a *reset* of the first subsystem SS1 (110, 120), and subsequently the failed fault containment unit (101, 102) performs a reintegration using the internal state of the other fault containment unit (102, 101).

6. Central control device, for controlling braking and/or steering and/or acceleration in a motor vehicle, the control device comprising a distributed computer system (100), where to said distributed computer system (100) sensors (112, 113, 122, 123) are connected, wherein the distributed computer system (100) is split into a first fault containment unit FCU1 (101) and a second fault containment unit FCU2 (102), wherein the FCU1 and the FCU2, or one or more components of the FCU1 and one or more components of the FCU2, have access to a globally synchronized time, and wherein
the FCU1 (101) and the FCU2 (102) each consist of a first subsystem SS1 (110, 120) and a second subsystem SS2 (111, 121), the first subsystems SS1 (110, 120) performing the processing of the sensor data and the second subsystems SS2 (111, 121) monitoring the function of the respective first subsystem SS1 (110, 120),
and wherein
one part of the sensors is at least connected to the FCU1 (101) and the other part of the sensors is at least connected to the FCU2 (102), and wherein
the FCU1 (101) and the FCU2 (102) are connected to a redundantly realizeed communication system (131, 132) having one or more actuators,
**characterized in that**
the FCU1 (101) and the FCU2 (102) are power-supplied by respective independent power supplies of their own, and wherein the FCU1 (101) and the FCU2 (102) exchange data exclusively via electrically isolated lines, so as to exclude propagation of a hardware fault from one fault containment unit to the other fault containment unit, wherein
the second subsystems SS2 (111, 121) periodically execute a challenge-response protocol to check the function of the first subsystem SS1 (110, 120), wherein the respective second subsystem (111, 121) of one fault contact unit (101, 102) periodically sends an *I-am-alive* message to the respective other fault contact unit (102, 101), wherein the time of the timely arrival of the periodic *I-am-alive* message is monitored by the other fault containment unit with a *time-out,* and wherein the times of transmission of the *I-am-alive* message and of the *time-out monitoring* of the *I-am-alive* message are synchronized over the global time in the receiving fault containment unit.

7. Control device according to claim 6, wherein the second subsystems SS2 (111, 121) periodically check the data structures within their fault containment units (101, 102).

8. Control device according to claim 6 or 7, wherein in the event of a detected failure of a fault containment unit (101, 102), in particular detected through the expiry of the timeout of the *I-am-alive* message, the surviving fault containment unit (102, 101) realizes a limited functionality using the sensors assigned to it.

9. Control device according to any one of claims 6 to 8, wherein each functioning fault containment unit (101, 102) periodically sends the relevant part of its internal state to the respective other fault containment unit (102, 101).

10. Control device according to any one of claims 6 to 9, wherein after a failure of the first subsystem SS1 (110, 120) of a fault containment unit (101, 102), the second subsystem SS2 (111, 121) initiates a reset of the first subsystem SS1 (110, 120), and subsequently the failed fault containment unit (101, 102) performs a reintegration using the internal state of the other fault containment unit (102, 101).

11. Control device according to any one of claims 6 to 10, wherein the FCU1 and FCU2 are arranged on a single printed circuit board (100).

12. Control device according to any one of claims 6 to 11, wherein a sensor associated with a fault containment unit is connected or connectable to a message distribution unit, said message distribution unit being connected to both the fault containment unit associated with the sensor and the other fault containment unit.

13. Control device according to any one of claims 6 to 12, wherein the FCUs are connected to a global clock, wherein preferably the FCUs are connected to a fault-tolerant global clock.

14. Control device according to any one of claims 6 to 13, wherein the FCUs are connected by means of an Ethernet communication system.

## Revendications

1. Procédé de traitement d'erreurs dans un dispositif de commande central, ledit dispositif de commande comprenant un système informatique réparti (100), auquel sont connectés des capteurs (112, 113, 122, 123), dans lequel
le système informatique réparti (100) se partage en une première unité de confinement de défauts FCU1 (101) et une seconde unité de confinement de défauts FCU2 (102), dans lequel le FCU1 et le FCU2, ou un ou plusieurs composants du FCU1 et un ou plusieurs composants du FCU2, ont accès à un temps global synchronisé, et dans lequel
le FCU1 (101) et le FCU2 (102) se composent chacun d'un premier sous-système SS1 (110, 120) et d'un second sous-système SS2 (111, 121), lesdits premiers sous-systèmes SS1 (110, 120) effectuant le traitement des données des capteurs et lesdits seconds sous-systèmes SS2 (111, 121) surveillant la fonction du premier sous-système SS1 (110, 120) respectif, et
une partie des capteurs étant au moins connectée au FCU1 (101) et l'autre partie des capteurs est au moins connectée au FCU2 (102), et
le FCU1 (101) et le FCU2 (102) étant reliés à un système de communication redondant (131, 132) avec un ou plusieurs actionneurs,
**caractérisé en ce que**
le FCU1 (101) et le FCU2 (102) sont chacun alimentés par leur propre alimentation électrique indépendante, le FCU1 (101) et le FCU2 (102) échangeant des données exclusivement par des lignes électriquement isolées, de sorte que la propagation d'un défaut matériel d'une unité de confinement des défauts à l'autre unité de confinement des défauts est exclue,
les seconds sous-systèmes SS2 (111, 121) exécutant périodiquement un protocole de défi-réponse pour vérifier le fonctionnement du premier sous-système SS1 (110, 120), dans lequel le second sous-système (111, 121) respectif d'une unité de contact de défaut (101, 102) envoie périodiquement un message *I-am-alive* à l'autre unité de contact de défaut (102, 101) respective, et dans lequel le moment d'arrivée à temps du message périodique *I-am-alive* est surveillé par l'autre unité de confinement de défauts avec un *time-out,* les moments de la transmission du message *I-am-alive* et de la *surveillance du time-out* du message *I-am-alive* dans l'unité de confinement de défauts de réception étant synchronisés sur le temps global.

2. Procédé selon la revendication 1, dans lequel les seconds sous-systèmes SS2 (111, 121) vérifient périodiquement les structures de données dans leur unité de confinement des défauts (101, 102) respective.

3. Procédé selon la revendication 1 ou 2, dans lequel, en cas de défaillance d'une unité de confinement des défauts (101, 102) détectée notamment par l'expiration du time-out du message *I-am-alive,* l'unité de confinement des défauts survivante (102, 101) réalise une fonctionnalité limitée en utilisant les capteurs qui lui sont associés.

4. Procédé selon l'une quelconque des revendications 1 à 3, dans lequel chaque unité de confinement des défauts (101, 102) en fonctionnement envoie périodiquement la partie pertinente de son état interne à l'autre unité de confinement des défauts (102, 101).

5. Procédé selon l'une quelconque des revendications 1 à 4, dans lequel, après une défaillance du premier sous-système SS1 (110, 120) d'une unité de confinement des défauts (101, 102), le second sous-système SS2 (111, 121) déclenche une réinitialisation du premier sous-système SS1 (110, 120), et ensuite l'unité de confinement des défauts défaillante (101, 102) effectue une réintégration en utilisant l'état interne de l'autre unité de confinement des défauts (102, 101).

6. Dispositif de commande centrale, pour commander le freinage et/ou la direction et/ou l'accélération dans un véhicule automobile, ledit dispositif de commande comprenant un système informatique réparti (100), auquel sont connectés des capteurs (112, 113, 122, 123), dans lequel
le système informatique réparti (100) se partage en une première unité de confinement de défauts FCU1 (101) et une seconde unité de confinement de défauts FCU2 (102), dans lequel le FCU1 et le FCU2, ou un ou plusieurs composants du FCU1 et un ou plusieurs composants du FCU2, ont accès à un temps synchronisé globalement, et dans lequel
le FCU1 (101) et le FCU2 (102) se composent chacun d'un premier sous-système SS1 (110, 120) et d'un second sous-système SS2 (111, 121), lesdits premiers sous-systèmes SS1 (110, 120) effectuant le traitement des données des capteurs et lesdits seconds sous-systèmes SS2 (111, 121) surveillant la fonction du premier sous-système SS1 (110, 120) respectif, et
une partie des capteurs étant au moins connectée au FCU1 (101) et l'autre partie des capteurs est au moins connectée au FCU2 (102), et
le FCU1 (101) et le FCU2 (102) étant reliés à un système de communication redondant (131, 132) avec un ou plusieurs actionneurs,
**caractérisé en ce que**
le FCU1 (101) et le FCU2 (102) sont chacun alimentés par leur propre alimentation électrique indépendante, le FCU1 (101) et le FCU2 (102) échangeant des données exclusivement par des lignes électriquement isolées, de sorte que la propagation d'un défaut matériel d'une unité de confinement des défauts à l'autre unité de confinement des défauts est exclue,
les seconds sous-systèmes SS2 (111, 121) exécutant périodiquement un protocole de défi-réponse pour vérifier le fonctionnement du premier sous-système SS1 (110, 120), dans lequel le second sous-système (111, 121) respectif d'une unité de contact de défaut (101, 102) envoie périodiquement un message *I-am-alive* à l'autre unité de contact de défaut (102, 101) respective, et dans lequel le moment d'arrivée à temps du message périodique *I-am-alive* est surveillé par l'autre unité de confinement de défauts avec un *time-out,* les moments de la transmission du message *I-am-alive* et de la *surveillance du time-out* du message *I-am-alive* dans l'unité de confinement de défauts de réception étant synchronisés sur le temps global.

7. Dispositif de commande selon la revendication 6, dans lequel les seconds sous-systèmes SS2 (111, 121) vérifient périodiquement les structures de données dans leur unité de confinement de défauts (101, 102) respective.

8. Dispositif de commande selon la revendication 6 ou 7, dans lequel, en cas de défaillance d'une unité de confinement des défauts (101, 102) détectée notamment par l'expiration du time-out du message *I-am-alive,* l'unité de confinement des défauts survivante (102, 101) réalise une fonctionnalité limitée en utilisant les capteurs qui lui sont associés.

9. Dispositif de commande selon l'une quelconque des revendications 6 à 8, dans lequel chaque unité de confinement des défauts (101, 102) en fonctionnement envoie périodiquement la partie pertinente de son état interne à l'autre unité de confinement des défauts (102, 101).

10. Dispositif de commande selon l'une quelconque des revendications 6 à 9, dans lequel, après une défaillance du premier sous-système SS1 (110, 120) d'une unité de confinement des défauts (101, 102), le second sous-système SS2 (111, 121) déclenche une réinitialisation du premier sous-système SS1 (110, 120), et ensuite l'unité de confinement des défauts défaillante (101, 102) effectue une réintégration en utilisant l'état interne de l'autre unité de confinement des défauts (102, 101).

11. Dispositif de commande selon l'une quelconque des revendications 6 à 10, dans lequel le FCU1 et le FCU2 sont disposés sur une seule carte de circuit imprimé (100).

12. Dispositif de commande selon l'une quelconque des revendications 6 à 11, dans lequel un capteur associé à une unité de confinement des défauts est connecté ou peut être connecté à une unité de distribution de messages, ladite unité de distribution de messages étant connectée à la fois à l'unité de confinement des défauts associée au capteur et à l'autre unité de confinement des défauts.

13. Dispositif de commande selon l'une quelconque des revendications 6 à 12, dans lequel les FCU sont connectées à une horloge globale, les FCU étant connectées de préférence à une horloge globale tolérante aux défauts.

14. Dispositif de commande selon l'une quelconque des revendications 6 à 13, dans lequel les FCU sont connectées au moyen d'un système de communication Ethernet.
